# EUROPEAN PATENT SPECIFICATION

(11) **EP 3 696 241 B1**
(45) Date of publication and mention of the grant of the patent: **20.09.2023**
(21) Application number: 19157550.5
(22) Date of filing: 15.02.2019
(51) Int. Cl.: B60C 1/00, C09D 115/00

(54) **SULFUR-FREE LIQUID RUBBER COMPOSITION**
SCHWEFELFREIE FLÜSSIGE KAUTSCHUKZUSAMMENSETZUNG
COMPOSITION DE CAOUTCHOUC LIQUIDE EXEMPT DE SOUFRE

(43) Date of publication of application: 19.08.2020
(73) Proprietor: EFTEC AG, 8590 Romanshorn (CH)
(72) Inventor: KRESSER, Klaus, 8590 Romanshorn (CH); STÖBERL, Birgit, 9000 St. Gallen (CH)
(74) Representative: Hepp Wenger Ryffel AG

(56) References cited:
- WO-A2-02/48255
- DATABASE WPI Week 198720 Thomson Scientific, London, GB; AN 1987-139996 XP002793093, & JP S62 79250 A (ASAHI DENKA KOGYO KK) 11 April 1987 (1987-04-11)
- DATABASE WPI Week 201833 Thomson Scientific, London, GB; AN 2018-364261 XP002793094, & CN 107 964 203 A (HANGZHOU HUAZHENG NEW MATERIAL CO LTD) 27 April 2018 (2018-04-27)
- DATABASE WPI Week 201537 Thomson Scientific, London, GB; AN 2015-30464G XP002793095, & CN 104 449 419 A (YANTAI TAISHENG REFINEMENT TECHNOLOGY CO) 25 March 2015 (2015-03-25)

## Description

This invention relates to a process for producing semi-finished automotive components wherein the composition is free from sulfur. The invention further relates to a sulfur-free rubber composition for use in the production of automotive components. The invention is also directed to a process for producing an automotive component and to the use of a semi-finished automotive component.

Peroxide curable rubber compounds offer several advantages over conventional, sulfur-curing, systems. Typically, these compounds display fast cure rates and the resulting cured articles tend to possess excellent heat resistance and low compression set. In addition, peroxide-curable formulations are much "cleaner" in that they do not contain any extractable sulfur impurities. Such rubber articles have therefore been suggested for use in condenser caps, biomedical devices or pharmaceutical applications (EP1819771) .

For use in automotive industries though, it is still preferred that sulfur is used as a vulcanizing agent for rubber compositions. For example in US 9 951 211, a heat-curing reactive composition based on elastomers and vulcanizing agents is disclosed. The composition is designed to have plastisol-like rheology and is used as a sealant, a coating or a means for bonding components.

Further compositions used in rubber production are disclosed in JP S6 279 250 A, CN 107 964 203 A and CN 104 449 419 A.

The use of such compositions in automotive industries has, however, become more and more problematic because semi-finished parts which are coated with rubber compositions, when subject to subsequent cathodic dip coating processes, can impair efficiency of such processes. Cathodic dip coating processes are commonly applied in the production of automotive parts, though, for the purposes of corrosion protection. In the endeavour to render cathodic dip coating process safer for man and more environmentally friendly, compositions used for cathodic dip coating increasingly avoid the use problematic components, in particular lead but also tin, in the applied cathodic dip coating material. These environmentally friendly cathodic dip coatings are more sensitive to interaction with compounds present in rubber seals and coatings. Due to the detrimental interaction of sulfur and the cathodic dip coating material, curing of the cathodic dip coating is frequently hampered and, especially, the areas surrounding the portions of the substrate carrying rubber compositions, show poor coating results after curing of the coating the oven. Due to the poor coating, these areas are more likely to be affected by corrosion throughout the life cycle of such components.

However, not only cathodic dip coating processes can be affected by the presence of certain rubber compositions on semi-finished parts at the time of curing. Also additional painting steps, for aesthetic and/or protective purposes, can be negatively affected by the presence of rubber seals and coatings.

Furthermore, when liquid rubber compositions are optimized in terms of rheology for easy and flexible application, they often have unsuitable sound-damping properties at the relevant temperature range of -10°C to +30°C.

It is therefore the purpose of the present invention to overcome the disadvantages in the state of the art. In particular, it is a purpose of the present invention to provide a process of applying a rubber composition for sealing and coating purposes to a substrate, where the rubber composition is configured to not negatively affect subsequent coating or painting steps, in particular does not negatively affect a subsequent cathodic dip coating process.

The problem is solved by a process and a rubber composition according to the independent claims of the present application.

Specifically the problem is solved by a process for producing a semi-finished automotive component, including the steps of:
- applying to a solid substrate, preferably a metal substrate, a liquid rubber composition to obtain a bead structure or a coating which covers an area of the solid substrate;
- treating the solid substrate carrying the bead structure or coating by cathodic dip coating;
- curing the coated solid substrate carrying the bead structure or coating to obtain an elastomeric rubber bead structure or an elastomeric rubber coating;
characterized in that the liquid rubber composition comprises polybutadiene resin with a vinyl functionality > 70 % and a peroxide and wherein the liquid rubber composition has a total amount of sulfur and organic sulfur donators and sulfur containing accelerators of less than 1 wt.-%, preferably less than 0.5 wt.-%, more preferably 0 wt.-%, of the rubber composition.

For the purposes of this invention, the term 'liquid' means having a viscosity defined by a flowrate of 75(±25) g/min at a temperature of 50°C when subject to a pressure of 4 bar/4 mm according to SAE J 1524 Viscosity Test.

For the purposes of this invention, the process does in particular not include a step of partially curing or pre-curing the bead structure or coating before treating the solid substrate carrying the bead structure or coating by cathodic dip coating. The liquid rubber composition according to the invention is designed such that it is sufficiently wash-off resistant without partial curing or pre-curing. Any process steps that might be required before cathodic dip coating (cleaning, passivating, rinsing etc.) can be performed with the substrate carrying the uncured, moist bead structure or coating. This renders the process over all faster and more efficient.

For the purposes of this invention, `partially curing or pre-curing' means heating the solid substrate carrying the carrying the bead structure or coating to temperatures of 80°C and above, preferably to temperatures of 100°C to 140°C, for a period of time of 5 to 30 minutes, preferably of 10 to 20 minutes.

For the purposes of this invention, 'curing' means heating the solid substrate carrying the bead structure or coating to temperatures of 160°C to 240°C, preferably to temperatures of 160°C to 175°C, for a period of time of 10 to 90 minutes, preferably of 10 to 20 minutes.

For the purposes of this invention 'sulfur', unless otherwise specified, means elemental sulfur and/or organic sulfur donators and/or sulfur-containing accelerators. For the purposes of this invention, organic sulfur donators and sulfur-containing accelerators are organosulfur compounds, having incorporated at least one sulfur molecule.

For the purposes of this invention, 'substantially free from sulfur' means a composition having a total amount of sulfur and organic sulfur donators and sulfur-containing accelerators of less than 1 wt-%, preferably less than 0.5 wt-%, more preferably 0 wt-% of the rubber composition.

Due to the absence of sulfur, negative effects on the reaction occurring in the cathodic dip coating process are avoided. In particular, the cathodic dip coating materials can comprise a tin-containing crosslinking catalyst, such as a dialkyl-tin oxide, a dioctyl-tin oxide or a dibutyl-tin oxide. Typically, the catalyst is added to the cathodic dip coating material in a minimal fraction of 0.1 to 3 wt-%. The function of such tin based catalysts is deactivated when the cathodic dip coating material during the curing step in the oven is exposed to a relevant amount of gaseous elemental sulfur. Such exposure can be avoided by providing a rubber composition substantially free from sulfur.

It is preferred that, in the initial step of the process, the rubber composition is applied to the substrate as a sealant, as an anti-corrosion coating, as an underbody protection of a car and/or as an electric or thermic insulator, most preferably, the rubber composition is a liquid applied sound deadener (LASD).

According to the invention, the liquid rubber composition comprises a peroxide. It is preferred that the peroxide is an organic peroxide, in particular an organic peroxide selected from the group consisting of diacetyl peroxide, di-tert-butyl peroxide, dicumyl peroxide, dibenzoyl peroxide, or combinations thereof.

The peroxide is used as a reaction initiator and thus replaces sulfur as a vulcanizing agent. It is an advantage of peroxides that they have good aging and low compression set properties. In particular, dibenzoyl peroxide has proven effective and easily dispersable.

In a preferred embodiment of the process the cathodic dip coating composition is based on amin modified epoxy resin, polyurethane resin, melamin resins, blocked isocyanate fillers and additives.

Such a composition is efficient, provides for excellent surface quality and protection of edges and cavities. The curing of such compositions can be catalysed by a tin- or bismuth-containing catalyst. From the group of tin- and bismuth-containing catalysts, the latter is preferred.

In a preferred embodiment auf the process, the cathodic dip coating composition comprises a tin- and/or bismuth based catalyst,
preferably doctyltindilaurate (DOTL), dibutyltindilaurate (DBTL), dioctyltindiactetate (DOTA), dioctyltinoxide (DOTO), dibutyltinoxide (DBTO), or combinations thereof,
more preferably bismuth carboxylate, modified bismuth carboxylate or combinations thereof.

More examples are known to one of skill in the art and include other dioctyltin- and dibutyltin-comprising compounds, but also monobutyltin-comprising compounds.

It is an advantage of tin- and/or bismuth based catalyst over traditionally applied lead based catalysts that their use is more environmentally friendly. Especially bismuth carboxylate catalysts, while being similarly effective than conventional lead or tin catalysts, have shown to be suitable for safe handling and are careful with natural resources. Such catalysts are effective for catalysing the cross-linking of a cathodic dip coating material as disclosed in this invention. However, both tin and bismuth-based catalysts can be easily deactivated by sulfuric gases present at elevated temperatures in the curing oven. It is therefore critical that any rubber composition applied to the substrate which is yet to be coated by cathodic dip coating and which coating is to be cured by means of a tin- or bismuth based catalyst at elevated temperatures is free from sulfur.

As described above, it is preferred that the rubber composition applied in this invention has a sound-damping effect. This becomes particularly clear when the rubber composition has the configuration and function of a liquid applied sound deadener (LASD). It is therefore preferred that the elastomeric rubber structure is characterized by a dissipation factor of > 0.1 according to EN ISO 6721 / DIN 53440 over the full temperature range of -8 to 18°C.

Such a dissipation factor is particularly useful when the LASD is used in automotive industries, where both the absence of sulfur and the sound-damping properties of the elastomeric rubber structure in the relevant range of typical outdoors and ambient temperatures are of utmost importance.

In another preferred embodiment, the elastomeric rubber structure has a glass transition temperature Tg of -10°C to 30°C, preferably of 0°C to 20°C, more preferably of 5°C to 15°C. The damping properties of an elastomeric rubber structure are optimized in a range near the glass transition temperature. Conventional butyl rubber has a glass transition temperature of -70°C which makes the compound unsuitable for use as a LASD. Polymeric compositions must thus be optimized in order to achieve the desired properties.

According to the invention, the liquid rubber composition applied in the process comprises polybutadiene resin with vinyl functionality > 70%. It is preferred that the vinyl functionality > 80%. It is preferred that the liquid rubber composition comprises at least 18 wt-% of functionalized polybutadiene resin, preferably 20-30 wt-% of functionalized polybutadiene resin, more preferably 23-27 wt-% of functionalized polybutadiene resin.

A polybutadiene resin with vinyl functionality > 70%, preferably a vinyl functionality > 80% is more reactive in cross-linking reactions than a polybutadiene having mostly cis- and trans-configured double bonds. Reactivity towards both other polymers of the polybutadiene resin or other kinds of molecules is enhanced. High reactivity of the polybutadiene is required to, at the same time, ensure low viscosity of the liquid rubber composition (applicability) and high cross-linking density of the cured elastomer and thus a higher glass transition temperature Tg.

In a preferred embodiment, the liquid rubber composition comprises acrylic monomers as a reactive diluent, preferably lauryl acrylate and/or acrylic acid ester. It is preferred that the liquid rubber composition comprises at least 1 wt-% of such a reactive diluent, preferably 1 to 8 wt-% of such a reactive diluent, more preferably 3 to 6 wt-% of reactive diluent. A liquid rubber composition comprising such a reactive diluent can be further optimised in terms of viscosity. A viscosity defined by a flowrate of 75(±25) g/min at a temperature of 50°C when subject to a pressure of 4 bar/4 mm is preferred.

In a preferred embodiment, the liquid rubber composition applied in the process comprises phosphoric acid-modified acrylic monomers, preferably phosphoric acid modified methacrylate. It is preferred that the liquid rubber composition comprises at least 1 wt-% of such a phosphoric acid-modified acrylic monomers, preferably 1 to 4 wt-% of phosphoric acid-modified acrylic monomers, more preferably 2 to 3 wt-% of phosphoric acid-modified acrylic monomers. A liquid rubber composition comprising phosphoric acid-modified acrylic monomers can be further optimised in terms of adhesive properties.

Another aspect of the invention is directed to a liquid rubber composition which is substantially free from sulfur, wherein the rubber composition comprises polybutadiene resin with a vinyl functionality > 70%, preferably > 80%; a peroxide, preferably an organic peroxide; and acrylic monomers as a reactive diluent for use in the production of automotive components.

It is an advantage of the absence of sulfur that the rubber composition can be applied to a solid substrate, preferably a metal substrate, to obtain a bead structure or a coating which covers an area of the solid substrate, and that this substrate, carrying the bead structure or coating can be treated by cathodic dip coating without pre-curing. The liquid rubber composition according to the invention is designed such that it is sufficiently wash-off resistant without partial curing or pre-curing. Any process steps that might be required before cathodic dip coating (cleaning, rinsing, passivating, etc.) can be performed with the uncured, moist bead structure or coating on substrate.

Following a series of process steps, the rubber composition which is substantially free from sulfur does not detrimentally impact the curing process of the material applied by cathodic dip coating.

In particular, the cathodic dip coating materials can comprise a tin-containing crosslinking catalyst, such as a dialkyltin oxide, a dioxtyltin oxide or a dibutyltin oxide. Typically, such a catalyst is added to the cathodict dip coating material in a in a minimal fraction of 0.1 to 3 wt-%, based on the solids content of the cathodic dip coating material. The function of such tin based catalysts is deactivated when the cathodic dip coating material during the curing step in the oven is exposed to a relevant amount of gaseous elemental sulfur. The effect is even more pronounced when bismuth based catalysts are applied. Bismuth carboxylate catalysts have shown to be particularly suitable for safe handling and are careful with natural resources. However, they can also be easily deactivated by sulfuric gases present at elevated temperatures in the curing oven.

Furthermore, the liquid rubber composition according to the invention also has excellent storage stability. Even after six months of storage at 25 to 40°C the liquid rubber composition can be readily processed, in particular applied to a substrate.

It is preferred that the liquid rubber composition comprises at least 18 wt-% of functionalized polybutadiene resin, preferably 20-30 wt-% of functionalized polybutadiene resin, more preferably 23-27 wt-% of functionalized polybutadiene resin A polybutadiene resin with vinyl functionality > 70%, preferably a vinyl functionality > 80% is more reactive in cross-linking reactions than a polybutadiene having mostly cis- and trans-configured double bonds. Reactivity towards both other polymers of the polybutadiene resin or other molecules present in the rubber composition is enhanced. High reactivity of the polybutadiene is required to, at the same time, ensure low viscosity of the liquid rubber composition (applicability) and high cross-linking density of the cured elastomer and thus a higher glass transition temperature Tg.

By means of such a liquid rubber composition, it is possible to achieve a dissipation factor of > 0.1 according to EN ISO 6721 / DIN 53440 over the full temperature range of -8 to 18°C, when the composition is cured to deliver an elastomeric rubber bead structure or an elastomeric rubber coating. A high dissipation factor in the relevant range is chosen to ensure that the elastomeric rubber bead structure or elastomeric rubber has a sound-damping function.

It is preferred that such a liquid rubber composition has a glass transition temperature Tg of -10° to 30°C, preferably of 0° to 20°C, more preferably of 5 to 15°C. This has proven beneficial in order to achieve the desired sound-damping properties in the relevant temperature range of -8 to 18°C.

According to the invention, the rubber composition comprises acrylic monomers as a reactive diluent. It is preferred that the acrylic monomers are lauryl acrylate and/or acrylic acid ester. It is preferred that the rubber composition comprises at least 1 wt-% of such a reactive diluent, preferably 2 to 8 wt-% of such a reactive diluent, more preferably 3 to 6 wt-% of such reactive diluent. A liquid rubber composition comprising such a reactive diluent can be further optimised in terms of viscosity. A viscosity defined by a flowrate of 75(±25) g/min when subject to a pressure of 4 bar/4 mm is preferred.

It is preferred that the rubber composition additionally comprises phosphoric acid modified acrylic monomers, preferably phosphoric acid modified methacrylate. It is preferred that the liquid rubber composition comprises at least 1 wt-% of such a phosphoric acid-modified acrylic monomers, preferably 1 to 4 wt-% of phosphoric acid-modified acrylic monomers, more preferably 2 to 3 wt-% of phosphoric acid-modified acrylic monomers. A liquid rubber composition comprising phosphoric acid-modified acrylic monomers can be further optimised in terms of adhesive properties.

It is preferred that the rubber composition additionally comprises additives, preferably carbon black, pigment, filler, humidity absorber, talc, mineral powder, such as mica, expandable or expanded microspheres, plasticizers, hydrophobing agents, resistance enhancers, viscosity modifiers and/or adhesion promoters.

It is an aspect of the present invention that the rubber composition which is substantially free from sulfur is used in the production of automotive components, in particular as a liquid applied sound deadener.

Another aspect of the invention is directed to a process for producing an automotive component, preferably a process as described above, including the steps of:
- applying to a solid substrate, preferably a metal substrate, a liquid rubber composition to obtain a bead structure or a coating which covers an area of the solid substrate;
- treating the solid substrate carrying the bead structure or coating by cathodic dip coating;
- subjecting the coated solid substrate carrying the bead structure or the coating to at least one painting step, preferably to at least two painting steps, more preferably to a first step of base coat application and a second step of clear coat application;
- curing the coated and painted solid substrate carrying the bead structure or coating to obtain an elastomeric rubber bead structure or an elastomeric rubber coating;
characterized in that the liquid rubber composition is substantially free from sulfur.

The process does in particular not include a step of partially curing or pre-curing the bead structure or coating before treating the solid substrate carrying the bead structure or coating by cathodic dip coating. Such a step, which is typically performed at moderate temperatures of 100 to 140°C over 20 to 40 minutes, can be omitted, rendering the process over all more efficient.

Whenever a solid substrate, carrying a partially dried bead structure or coating, is subject to at least one painting step, there is frequently observed a detrimental effect on the painting surface structure in the areas surrounding the portions of the substrate having applied rubber compositions. More specifically, the formation of paint spots and bits occurs upon curing of the at least one paint layer in the oven. Such paint spots or bits diminish the quality of the (multicoat) color and/or paint systems. Among other things, an undesirable clouding effect in the areas surrounding the portions of the substrate having applied rubber compositions can result.

It has now surprisingly be found that by using sulfur-free rubber compositions according to the invention for covering or joining substrates, preferably metal substrates, formation of paint spots and bits upon curing can be substantially reduced or even completely avoided. By using sulfur-free rubber compositions according to the invention, the curing of the applied paint results in even, smooth and consistent coatings with excellent optical properties and corrosion protection effects.

It is preferred that after subjecting the coated solid substrate carrying the bead structure or the coating to at least one painting step, preferably to at least two painting steps, more preferably to a first step of base coat application and a second step of clear coat application.

It is possible, though not preferred, to use liquid rubber compositions substantially free from elemental sulfur, in particular free from S₆ and S₈ sulfur cycles, while still containing sulfur containing accelerators organic sulfur donating components. It has been found that the substantial reduction of bit formation during the curing of painting steps can be achieved even when organosulfur compounds are present in the rubber compositions. In such cases, the optical properties of the painting coats are not affected. However, impaired corrosion protection resulting from the cathodic dip coating step in the areas surrounding the portions of the substrate which carry rubber compositions cannot be completely avoided.

Another aspect of the invention is directed to the use of a semi-finished automotive component obtained or obtainable by a process as described above in the assembly of a car's body.

It is preferred that the component is used as an energy-absorbing, insulating or corrosion protective element, preferably a damping element, on a car's body. It is particularly preferred that the semi-finished or finished automotive components be used for wet areas of a car's body such as doors, foot areas and wheel houses.

The following example is to further illustrate the invention.

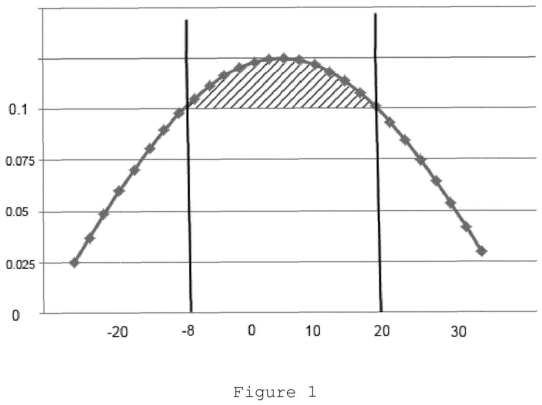

Figure 1 shows the dissipation factor as a function of temperature, measured in an Oberst-device according to EN ISO 6721 / DIN 53440.

A composition was mixed of the following components:

| Component | Weight-% |
|---|---|
| Carbon black | 0.5 |
| Filler, e.g. talcum | 40.7 |
| Functionalized butadiene resin | 25.4 |
| Muskovitglimmer | 16.5 |
| Peroxide | 0.4 |
| Humidity absorber, e.g. based on CaO | 3.0 |
| Microspheres | 0.1 |
| Resistance enhancer | 6.4 |
| Reactive diluents, e.g. based on acrylic acid | 5.0 |
| Adhesion promotor, e.g. based on acrylic acid ester | 2.0 |

The composition was measured to have a glass transition temperature of 10°C, by differential scanning calorimetry (DIN EN ISO 11357-2 at a heating rate of 20 Kelvin/minute).

Treatment by electrodic dip coating only:
The mixture was applied to a first and a second aluminium plate as half-cylindrical bead structure having a diameter of approximately 1.5 cm. The plates carrying the bead structures were subject to pre-treatment processes (cleaning, phosphating, rinsing with water) in a moist state without any antecedent pre-curing or partial curing. Cathodic dip coating was then performed by using tin-free cathodic e-coating paint (CathoGuard 800).

The first plate carrying a bead structure was cured in the over at a temperature of 190°C for 10 minutes. No deficiencies of the coating in the area of the bead structure were observed.

Treatment by electrodic dip coating only:
The second plate carrying a bead structure was subject to a colour base coat application and a clear coat application, for example a lacquer based on two-component polyurethane by OEM (Original Equipment Manufacturer). It was then cured in the oven at a temperature of 140°C for 30 minutes.

No deficiencies of the coating nor formation of bits or paint spots in the area of the bead structure were observed.

The dissipation factor of the elastomeric rubber structure was measured according to EN ISO 6721 / DIN 53440 over a range of - 20°C to +30°C and was found to be > 0.1 in the temperature range of -8 to 20°C.

Figure 1 shows the dissipation factor as a function of temperature, measured by an Oberst-device according to EN ISO 6721 / DIN 53440 of the exemplary composition. The x-axis displays the temperature in degrees Celsius. The y-axis displays the dissipation factor. As can be seen from the chart, in the most relevant temperature range from -8°C to 20°C the dissipation factor is > 0.1 throughout. This property renders the disclosed composition particularly useful for applications in automotive industries.

## Claims

1. Process for producing a semi-finished automotive component, including the steps of:
- applying to a solid substrate, preferably a metal substrate, a liquid rubber composition to obtain a bead structure or a coating which covers an area of the solid substrate;
- treating the solid substrate carrying the bead structure or coating by cathodic dip coating;
- curing the coated solid substrate carrying the bead structure or coating to obtain an elastomeric rubber bead structure or an elastomeric rubber coating;
**characterized in that** the liquid rubber composition comprises polybutadiene resin with a vinyl functionality > 70 % and a peroxide and wherein the liquid rubber composition has a total amount of sulfur and organic sulfur donators and sulfur-containing accelerators of less than 1 wt.-%, preferably less than 0.5 wt.-%, more preferably 0 wt.-%, of the rubber composition.

2. Process according to claim 1, wherein the peroxide is an organic peroxide, in particular an organic peroxide selected from the group consisting of diacetyl peroxide, di-tert-butyl peroxide, dicumyl peroxide, dibenzoyl peroxide or combinations thereof.

3. Process according to any of the preceding claims, wherein the cathodic dip coating composition is based on epoxy resin, polyurethane resin, melamin resins and blocked isocyanate.

4. Process according to any of the preceding claims, wherein the cathodic dip coating composition comprises a tin-and/or bismut-based catalyst, preferably doctyltindilaurate (DOTL), dibutyltindilaurate (DBTL), dioctyltindiactetate (DOTA), dioctyltinoxide (DOTO), dibutyltinoxide (DBTO), or combinations thereof, and more preferably bismuth carboxylate, modified bismuth carboxylate, or combinations thereof .

5. Process according to any of the preceding claims, wherein the elastomeric rubber structure is **characterized by** a dissipation factor of > 0.1 according to EN ISO 6721 / DIN 53440 over the full temperature range of -8 to 18°C.

6. Process according to any of the preceding claims, wherein the elastomeric rubber structure has a glass transition temperature Tg of -10° to 30°C, preferably of 0° to 20°C, more preferably of 5 to 15°C.

7. Process according to any of the preceding claims, wherein the liquid rubber composition comprises polybutadiene resin with vinyl functionality > 80%.

8. Process according to any of the preceding claims, wherein the liquid rubber composition comprises acrylic monomers as a reactive diluent, preferably lauryl acrylate and/or acrylic acid ester.

9. Process according to any of the preceding claims, wherein the liquid rubber composition comprises phosphoric acid-modified acrylic monomers, preferably phosphoric acid modified methacrylate.

10. Liquid rubber composition which has less than 1 wt. % preferably less than 0.5 wt.-%, more preferably 0 wt.-%, sulfur and organic sulfur donators and sulfur-containing accelerators based on the rubber composition for use in the production of automotive components, comprising a polybutadiene resin with a vinyl functionality > 70%, preferably > 80%; a peroxide, preferably an organic peroxide; and acrylic monomers as a reactive diluent.

11. Rubber composition according to claim 10, wherein the acrylic monomers is selected from lauryl acrylate and/or acrylic acid ester.

12. Rubber composition according to any of claims 10 or 11, comprising phosphoric acid modified acrylic monomers, preferably phosphoric acid modified methacrylate.

13. Use of a rubber composition according to any of claims 10 to 12 in the production of automotive components, in particular as a liquid applied sound deadener.

14. Process for producing an automotive component, preferably a process according to any of claims 1 to 9, including the steps of:
- applying to a solid substrate, preferably a metal substrate, a liquid rubber composition to obtain a bead structure or a coating which covers an area of the solid substrate;
- treating the solid substrate carrying the bead structure or coating by cathodic dip coating;
- subjecting the coated solid substrate carrying the bead structure or the coating to at least one painting step, preferably to at least two painting steps, more preferably to a first step of base coat application and a second step of clear coat application;
- curing the coated and painted solid substrate carrying the bead structure or coating to obtain an elastomeric rubber bead structure or an elastomeric rubber coating;
**characterized in that** the liquid rubber composition comprises polybutadiene resin with a vinyl functionality > 70 % and a peroxide and wherein the liquid rubber composition has a total amount of sulfur and organic sulfur donators and sulfur-containing accelerators of less than 1 wt.-%, preferably less than 0.5 wt.-%, more preferably 0 wt.-%, of the rubber composition..

15. Use of a semi-finished automotive component obtained or obtainable by a process according to any of claims 1 to 9 or of an automotive component obtained or obtainable by a process according to claim 14 in the assembly of a car's body.

## Patentansprüche

1. Verfahren zur Herstellung eines halbfertigen Automobilbauteils, das die folgenden Schritte umfasst:
- Auftragen einer flüssigen Kautschukzusammensetzung auf ein festes Substrat, vorzugsweise ein Metallsubstrat, um eine Perlenstruktur oder eine Beschichtung zu erhalten, die einen Bereich des festen Substrats bedeckt;
- Behandlung des festen Substrats, das die Perlenstruktur oder Beschichtung trägt, durch kathodische Tauchlackierung;
- Aushärten des beschichteten festen Substrats, das die Perlenstruktur oder Beschichtung trägt, um eine elastomere Gummiperlenstruktur oder eine elastomere Gummibeschichtung zu erhalten;
**dadurch gekennzeichnet, dass** die flüssige Kautschukzusammensetzung Polybutadienharz mit einer Vinylfunktionalität > 70 % und ein Peroxid umfasst und wobei die flüssige Kautschukzusammensetzung eine Gesamtmenge an Schwefel und organischen Schwefeldonatoren und schwefelhaltigen Beschleunigern von weniger als 1 Gew.-%, vorzugsweise weniger als 0,5 Gew.-%, noch bevorzugter 0 Gew.-%, der Kautschukzusammensetzung aufweist.

2. Verfahren nach Anspruch 1, wobei das Peroxid ein organisches Peroxid ist, insbesondere ein organisches Peroxid ausgewählt aus der Gruppe bestehend aus Diacetylperoxid, Di-tert-butylperoxid, Dicumylperoxid, Dibenzoylperoxid oder Kombinationen davon.

3. Verfahren nach einem der vorangehenden Ansprüche, wobei die kathodische Tauchbeschichtungszusammensetzung auf Epoxidharz, Polyurethanharz, Melaminharzen und blockiertem Isocyanat basiert.

4. Verfahren nach einem der vorangehenden Ansprüche, wobei die kathodische Tauchbeschichtungszusammensetzung einen Katalysator auf Zinn- und/oder Bismutbasis, vorzugsweise Doctyltindilaurat (DOTL), Dibutyltindilaurat (DBTL), Dioctyltindiactetat (DOTA), Dioctyltinoxid (DOTO), Dibutyltinoxid (DBTO) oder Kombinationen davon, und noch bevorzugter Bismutcarboxylat, modifiziertes Bismutcarboxylat oder Kombinationen davon umfasst.

5. Verfahren nach einem der vorangehenden Ansprüche, wobei die Elastomerkautschukstruktur durch einen Verlustfaktor von > 0,1 nach EN ISO 6721 / DIN 53440 über den gesamten Temperaturbereich von -8 bis 18°C gekennzeichnet ist.

6. Verfahren nach einem der vorangehenden Ansprüche, wobei die elastomere Kautschukstruktur eine Glasübergangstemperatur Tg von -10° bis 30°C, vorzugsweise von 0° bis 20°C, besonders bevorzugt von 5 bis 15°C aufweist.

7. Verfahren nach einem der vorangehenden Ansprüche, wobei die flüssige Kautschukzusammensetzung Polybutadienharz mit einer Vinylfunktionalität von > 80 % umfasst.

8. Verfahren nach einem der vorangehenden Ansprüche, wobei die flüssige Kautschukzusammensetzung Acrylmonomere als reaktives Verdünnungsmittel enthält, vorzugsweise Laurylacrylat und/oder Acrylsäureester.

9. Verfahren nach einem der vorangehenden Ansprüche, wobei die flüssige Kautschukzusammensetzung mit Phosphorsäure modifizierte Acrylmonomere, vorzugsweise mit Phosphorsäure modifiziertes Methacrylat, enthält.

10. Flüssige Kautschukzusammensetzung, die weniger als 1 Gew.-%, vorzugsweise weniger als 0,5 Gew.-%, besonders bevorzugt 0 Gew.-%, Schwefel und organische Schefeldonatoren und schwefelhaltige Beschleuniger, bezogen auf die Kautschukzusammensetzung, aufweist, zur Verwendung bei der Herstellung von Automobilteilen, umfassend ein Polybutadienharz mit einer Vinylfunktionalität > 70 %, vorzugsweise > 80 %; ein Peroxid, vorzugsweise ein organisches Peroxid; und Acrylmonomere als Reaktivverdünner.

11. Kautschukzusammensetzung nach Anspruch 10, wobei die Acrylmonomere aus Laurylacrylat und/oder Acrylsäureester ausgewählt sind.

12. Kautschukzusammensetzung nach einem der Ansprüche 10 oder 11, umfassend mit Phosphorsäure modifizierte Acrylmonomere, vorzugsweise mit Phosphorsäure modifiziertes Methacrylat.

13. Verwendung einer Kautschukzusammensetzung nach einem der Ansprüche 10 bis 12 bei der Herstellung von Automobilteilen, insbesondere als flüssig aufgetragener Schalldämpfer.

14. Verfahren zur Herstellung eines Automobilbauteils, vorzugsweise ein Verfahren nach einem der Ansprüche 1 bis 9, umfassend die Schritte:
- Auftragen einer flüssigen Kautschukzusammensetzung auf ein festes Substrat, vorzugsweise ein Metallsubstrat, um eine Perlenstruktur oder eine Beschichtung zu erhalten, die einen Bereich des festen Substrats bedeckt;
- Behandlung des festen Substrats, das die Perlenstruktur oder Beschichtung trägt, durch kathodische Tauchlackierung;
- Unterziehen des beschichteten festen Substrats, das die Perlenstruktur oder die Beschichtung trägt, mindestens einem Lackierschritt, vorzugsweise mindestens zwei Lackierschritten, besonders bevorzugt einem ersten Schritt des Auftragens eines Grundlacks und einem zweiten Schritt des Auftragens eines Klarlacks;
- Aushärten des beschichteten und lackierten festen Substrats, das die Perlenstruktur oder Beschichtung trägt, um eine elastomere Gummiperlenstruktur oder eine elastomere Gummibeschichtung zu erhalten;
**dadurch gekennzeichnet, dass** die flüssige Kautschukzusammensetzung Polybutadienharz mit einer Vinylfunktionalität > 70 % und ein Peroxid umfasst und wobei die flüssige Kautschukzusammensetzung eine Gesamtmenge an Schwefel und organischen Schefeldonatoren und schwefelhaltigen Beschleunigern von weniger als 1 Gew.-%, vorzugsweise weniger als 0,5 Gew.-%, noch bevorzugter 0 Gew.-%, der Kautschukzusammensetzung aufweist.

15. Verwendung eines halbfertigen Automobilbauteils, das durch ein Verfahren nach einem der Ansprüche 1 bis 9 hergestellt oder erhältlich ist, oder eines Automobilbauteils, das durch ein Verfahren nach Anspruch 14 hergestellt oder erhältlich ist, bei der Montage einer Fahrzeugkarosserie.

## Revendications

1. Procédé de production d'un composant automobile semi-fini, comprenant les étapes suivantes :
- appliquer sur un substrat solide, de préférence un substrat métallique, une composition de caoutchouc liquide pour obtenir une structure de perles ou un revêtement qui couvre une zone du substrat solide ;
- traiter le substrat solide portant la structure de perles ou le revêtement par un revêtement cathodique par immersion ;
- durcir le substrat solide revêtu portant la structure de perles ou le revêtement pour obtenir une structure de perles de caoutchouc élastomère ou un revêtement de caoutchouc élastomère ;
**caractérisée par le fait que** la composition de caoutchouc liquide comprend une résine polybutadiène avec une fonctionnalité vinyle > 70 % et un peroxyde et que la composition de caoutchouc liquide a une quantité totale de soufre et de donneurs de soufre organiques et d'accélérateurs contenant du soufre inférieure à 1 % en poids, de préférence inférieure à 0,5 % en poids, plus préférentiellement 0 % en poids, de la composition de caoutchouc.

2. Procédé selon la revendication 1, dans lequel le peroxyde est un peroxyde organique, en particulier un peroxyde organique choisi dans le groupe constitué par le peroxyde de diacétyle, le peroxyde de di-tert-butyle, le peroxyde de dicumyle, le peroxyde de dibenzoyle ou des combinaisons de ceux-ci.

3. Procédé selon l'une quelconque des revendications précédentes, dans lequel la composition de revêtement par immersion cathodique est à base de résine époxy, de résine polyuréthane, de résine de mélamine et d'isocyanate bloqué.

4. Procédé selon l'une quelconque des revendications précédentes, dans lequel la composition de revêtement par immersion cathodique comprend un catalyseur à base d'étain et/ou de bismuth, de préférence le doctyltindilaurate (DOTL), le dibutyltindilaurate (DBTL), le dioctyltindiactetate (DOTA), le dioctyltinoxyde (DOTO), le dibutyltinoxyde (DBTO), ou des combinaisons de ceux-ci, et plus préférentiellement le carboxylate de bismuth, le carboxylate de bismuth modifié, ou des combinaisons de ceux-ci.

5. Procédé selon l'une quelconque des revendications précédentes, dans lequel la structure en caoutchouc élastomère est **caractérisée par** un facteur de dissipation > 0,1 selon EN ISO 6721 / DIN 53440 sur toute la plage de température de -8 à 18°C.

6. Procédé selon l'une quelconque des revendications précédentes, dans lequel la structure élastomérique en caoutchouc a une température de transition vitreuse Tg de -10° à 30°C, de préférence de 0° à 20°C, plus préférentiellement de 5 à 15°C.

7. Procédé selon l'une quelconque des revendications précédentes, dans lequel la composition de caoutchouc liquide comprend une résine polybutadiène avec une fonctionnalité vinyle > 80 %.

8. Procédé selon l'une quelconque des revendications précédentes, dans lequel la composition de caoutchouc liquide comprend des monomères acryliques comme diluant réactif, de préférence de l'acrylate de lauryle et/ou de l'ester d'acide acrylique.

9. Procédé selon l'une quelconque des revendications précédentes, dans lequel la composition de caoutchouc liquide comprend des monomères acryliques modifiés par l'acide phosphorique, de préférence du méthacrylate modifié par l'acide phosphorique.

10. Composition de caoutchouc liquide contenant moins de 1 % en poids, de préférence moins de 0,5 % en poids, de préférence 0 % en poids, de soufre et de donneurs de soufre organiques et d'accélérateurs contenant du soufre sur la base de la composition de caoutchouc pour utilisation dans la production de composants automobiles, comprenant une résine polybutadiène avec une fonctionnalité vinyle > 70 %, de préférence > 80 % ; un peroxyde, de préférence un peroxyde organique ; et des monomères acryliques en tant que diluant réactif.

11. Composition de caoutchouc selon la revendication 10, dans laquelle les monomères acryliques sont choisis parmi l'acrylate de lauryle et/ou l'ester d'acide acrylique.

12. Composition de caoutchouc selon l'une des revendications 10 ou 11, comprenant des monomères acryliques modifiés par l'acide phosphorique, de préférence du méthacrylate modifié par l'acide phosphorique.

13. Utilisation d'une composition de caoutchouc selon l'une des revendications 10 à 12 dans la production de composants automobiles, en particulier en tant qu'amortisseur de bruit appliqué par voie liquide.

14. Procédé de fabrication d'un composant automobile, de préférence un procédé selon l'une quelconque des revendications 1 à 9, comprenant les étapes suivantes :
- appliquer sur un substrat solide, de préférence un substrat métallique, une composition de caoutchouc liquide pour obtenir une structure de perles ou un revêtement qui couvre une zone du substrat solide ;
- traiter le substrat solide portant la structure de perles ou le revêtement par un revêtement cathodique par immersion ;
- soumettre le substrat solide revêtu portant la structure de perles ou le revêtement à au moins une étape de peinture, de préférence à au moins deux étapes de peinture, plus préférentiellement à une première étape d'application d'une couche de base et à une deuxième étape d'application d'une couche transparente ;
- durcir le substrat solide enduit et peint portant la structure de perles ou le revêtement pour obtenir une structure de perles en caoutchouc élastomère ou un revêtement en caoutchouc élastomère ;
**caractérisée par le fait que** la composition de caoutchouc liquide comprend une résine polybutadiène avec une fonctionnalité vinyle > 70 % et un peroxyde et que la composition de caoutchouc liquide a une quantité totale de soufre et de donneurs de soufre organiques et d'accélérateurs contenant du soufre inférieure à 1 % en poids, de préférence inférieure à 0,5 % en poids, plus préférentiellement à 0 % en poids, de la composition de caoutchouc.

15. Utilisation d'un composant automobile semi-fini obtenu ou susceptible d'être obtenu par un procédé selon l'une des revendications 1 à 9 ou d'un composant automobile obtenu ou susceptible d'être obtenu par un procédé selon la revendication 14 dans l'assemblage de la carrosserie d'une voiture.
